(19)

Europäisches
Patentamt
European
Patent Office
Office européen
des brevets

(11)  **EP 4 394 918 A1**

(12)  **EUROPEAN PATENT APPLICATION**
published in accordance with Art. 153(4) EPC

(43) Date of publication:
   **03.07.2024  Bulletin 2024/27**

(21) Application number: **22887637.1**

(22) Date of filing: **27.10.2022**

(51) International Patent Classification (IPC):
   *H01M 4/131* (2010.01)    *H01M 4/133* (2010.01)
   *H01M 4/134* (2010.01)    *H01M 4/36* (2006.01)
   *H01M 4/48* (2010.01)    *H01M 4/38* (2006.01)
   *H01M 4/587* (2010.01)    *H01M 4/62* (2006.01)
   *H01M 10/052* (2010.01)    *H01M 4/525* (2010.01)

(52) Cooperative Patent Classification (CPC):
   H01M 4/131; H01M 4/133; H01M 4/134;
   H01M 4/36; H01M 4/38; H01M 4/48; H01M 4/525;
   H01M 4/587; H01M 4/62; H01M 10/052;
   Y02E 60/10

(86) International application number:
   **PCT/KR2022/016554**

(87) International publication number:
   **WO 2023/075442 (04.05.2023 Gazette 2023/18)**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority:  **27.10.2021  KR 20210144587**

(71) Applicant: **LG Energy Solution, Ltd.**
   **Seoul 07335 (KR)**

(72) Inventors:
   • **KIM, Ye Lin**
     **Daejeon 34122 (KR)**
   • **JO, Mi Ru**
     **Daejeon 34122 (KR)**
   • **PARK, Sung Bin**
     **Daejeon 34122 (KR)**
   • **JEONG, Seung Hwan**
     **Daejeon 34122 (KR)**

(74) Representative: **Hoffmann Eitle**
   **Patent- und Rechtsanwälte PartmbB**
   **Arabellastraße 30**
   **81925 München (DE)**

(54)  **ANODE AND SECONDARY BATTERY COMPRISING SAME**

(57)  The present invention relates to a negative electrode including: a negative electrode current collector; a first negative electrode active material layer disposed on the negative electrode current collector and comprising a first carbon-based active material, a first silicon-based active material, and a first binder; and a second negative electrode active material layer disposed on the first negative electrode active material layer and including a second carbon-based active material, a second silicon-based active material, and a second binder, wherein the first binder includes styrene-butadiene rubber, and the second binder includes a copolymer comprising an acrylamide-derived unit, an acrylic acid-derived unit, and an acrylonitrile-derived unit.

[FIG. 1]

10

**Description**

TECHNICAL FIELD

CROSS-REFERENCE TO RELATED APPLICATION

This application claims the priority of Korean Patent Application No. 10-2021-0144587, filed on October 27, 2021, in the Korean Intellectual Property Office, the disclosure of which is incorporated herein by reference.

TECHNICAL FIELD

The present invention relates to a negative electrode and a secondary battery including the same.

BACKGROUND ART

Recently, with the rapid spread of electronic apparatuses using batteries such as mobile phones, notebook computers, electric vehicles, and the like, demands for secondary batteries that are small and lightweight and have relatively high capacity have been rapidly increasing. Particularly, lithium secondary batteries are in the limelight as driving power sources for portable electronic devices because the lithium secondary batteries are lightweight and have high energy density. Thus, research and development efforts to improve performance of the lithium secondary batteries are being actively conducted.

In general, a lithium secondary battery includes a positive electrode, a negative electrode, a separator interposed between the positive electrode and the negative electrode, an electrolyte, an organic solvent, and the like. In addition, active material layers including a positive electrode active material or a negative electrode active material may be formed on the collector in the positive electrode and the negative electrode. In general, lithium-containing metal oxide such as $LiCoO_2$ or $LiMn_2O_4$ is used as a positive electrode active material in the positive electrode, and thus, a carbon-based active material or a silicon-based active material that does not contain lithium is used as a negative electrode active material in the negative electrode.

Particularly, the silicon-based active material of the negative electrode active materials is attracting attention in that the silicon-based active material has a capacity about 10 times higher than that of the carbon-based active material and has an advantage of being able to realize high energy density even with a thin electrode. However, the silicon-based active material is not universally used due to problems such as volume expansion due to charging and discharging, cracking/damage of active material particles caused due to the volume expansion, and degradation of lifespan characteristics due to the cracking/damage.

In addition, when the silicon-based active material is used at a high voltage, the problems such as the volume expansion due to the charging and discharging, deterioration in structural stability of the negative electrode, excessive formation of a solid electrolyte interface layer (SEI layer), and electrolyte depletion intensify, it is a situation that has been limitedly used in automobile batteries having an operating voltage range less than those of portable electronic devices.

Therefore, in the negative electrode and secondary batteries using the silicon-based active material, there is a need to develop the negative electrode and the secondary batteries having high lifespan characteristics when using the high energy density and high voltage.

A negative electrode active material for a lithium secondary battery, a method for manufacturing the same, and a lithium secondary battery including the same are disclosed in Korean Patent Publication No. 10-2017-0074030. Here, although a negative electrode active material including a porous silicon-carbon composite is disclosed, there is a limit to solving the above problems.

[PRIOR ART DOCUMENTS]

[PATENT DOCUMENTS]

Korean Patent Publication No. 10-2017-0074030

DISCLOSURE OF THE INVENTION

TECHNICAL PROBLEM

One object of the present invention is to provide a negative electrode having improved electrode adhesion and significantly improved lifespan performance by preventing negative electrode deterioration due to thickness expansion during charging and discharging.

In addition, another object of the present invention is to provide a secondary battery including the above-described negative electrode.

## TECHNICAL SOLUTION

The present invention provides a negative electrode including: a negative electrode current collector; a first negative electrode active material layer disposed on the negative electrode current collector and including a first carbon-based active material, a first silicon-based active material, and a first binder; and a second negative electrode active material layer disposed on the first negative electrode active material layer and including a second carbon-based active material, a second silicon-based active material, and a second binder, wherein the first binder includes styrene-butadiene rubber, and the second binder includes a copolymer comprising an acrylamide-derived unit, an acrylic acid-derived unit, and an acrylonitrile-derived unit.

In addition, the present invention provides a secondary battery including: the above-described negative electrode; a positive electrode facing the negative electrode; a separator interposed between the negative electrode and the positive electrode; and an electrolyte.

## ADVANTAGEOUS EFFECTS

The negative electrode of the present invention, which has the structure in which the negative electrode current collector; the first negative electrode active material layer; and the second negative electrode active material layer are sequentially stacked, may include: the first negative electrode active material layer including the first carbon-based active material, the first silicon-based active material, and the first binder; and the second negative electrode active material layer including the second carbon-based active material, the second silicon-based active material and the second binder, wherein the first binder includes styrene-butadiene rubber, and the second binder includes the copolymer including the acrylamide-derived unit, the acrylic acid-derived unit, and the acrylonitrile-derived unit. According to the negative electrode of the present invention, styrene-butadiene rubber, which has a low electrolyte absorption rate to improve adhesion even when an electrolyte is impregnated, may be contained in the first negative electrode active mater ial layer (lower layer) as the first binder, and a specific copolymer having an excellent thickness control effect and flexibility at the same time is contained in the second negative electrode active material layer as a second binder. Thus, since it has excellent adhesion and thickness expansion control effect, the lifespan performance of the negative electrode containing the carbon-based active material and the silicon-based active material and the secondary battery may be significantly improved. Particularly, the negative electrode of the present invention may show excellent lifespan performance improvement in use in the high voltage range or high-loading negative electrode.

## BRIEF DESCRIPTION OF THE DRAWINGS

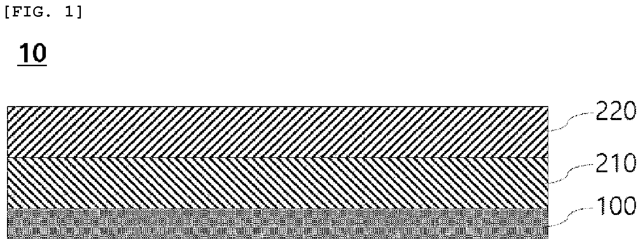

FIG. 1 is a schematic side view for explaining a negative electrode according to the present invention.

## MODE FOR CARRYING OUT THE INVENTION

Terms or words used in the specification and claims should not be construed as limited to a lexical meaning, and should be understood as appropriate notions by the inventor based on that he/she is able to define terms to describe his/her invention in the best way to be seen by others.

Terms used in this specification are only used to describe exemplary embodiments, and are not intended to limit the present invention. The terms of a singular form may include plural forms unless referred to the contrary.

In this specification, it should be understood that the terms "include," "comprise," or "have" are intended to indicate that there is an embodied feature, number, step, component, or combination thereof, but does not exclude the possibility of the presence or the addition of one or more other features, numbers, steps, components, or combinations thereof.

In this specification, an average particle diameter $D_{50}$ may be defined as a particle diameter corresponding to 50% of a volume cumulative amount in a particle diameter distribution curve of the particles. The average particle diameter $D_{50}$ may be measured using, for example, a laser diffraction method. The laser diffraction method is generally capable of measuring particle diameters of several millimeters from submicron range and obtaining results with high reproducibility and high resolution.

Hereinafter, the present invention will be described with reference to the accompanying drawings. Particularly, FIG. 1 is a schematic side view for explaining a negative electrode according to the present invention.

**<Negative electrode>**

The present invention relates to a negative electrode, specifically a negative electrode for a lithium secondary battery.

Referring to FIG. 1, a negative electrode 10 of the present invention includes: a negative electrode current collector 100; a first negative electrode active material layer 210 disposed on the negative electrode current collector 100 and including a first carbon-based active material, a first silicon-based active material, and a first binder; and a second negative electrode active material layer 220 disposed on the first negative electrode active material layer 210 and including a second carbon-based active material, a second silicon-based active material, and a second binder. The first binder includes styrene-butadiene rubber, and the second binder includes a copolymer including an acrylamide-derived unit, an acrylic acid-derived unit, and an acrylonitrile-derived unit.

According to the related art, the silicon-based active material has an advantage of having a capacity higher than that of the carbon-based active material, but is not universally used because of a high degree of volume expansion and contraction caused by lithium intercalation and deintercalation. This problem is further aggravated when the negative electrode is highly loaded, or the negative electrode is used in a high voltage range.

In order to solve this problem, the negative electrode of the present invention, which has a structure in which a negative electrode current collector; a first negative electrode active material layer; and a second negative electrode active material layer are sequentially stacked, includes: a first negative electrode active material layer including a first carbon-based active material, a first silicon-based active material, and a first binder; and a second negative electrode active material layer including a second carbon-based active material, a second silicon-based active material and a second binder, wherein the first binder includes styrene-butadiene rubber, and the second binder includes a copolymer including an acrylamide-derived unit, an acrylic acid-derived unit, and an acrylonitrile-derived unit. According to the negative electrode of the present invention, styrene-butadiene rubber, which has a low electrolyte absorption rate to improve adhesion even when an electrolyte is impregnated, may be contained in the first negative electrode active material layer (lower layer) as the first binder, and a specific copolymer having an excellent thickness control effect and flexibility at the same time is contained in the second negative electrode active material layer as a second binder. Thus, since it has excellent adhesion and thickness expansion control effect, the lifespan performance of the negative electrode containing the carbon-based active material and the silicon-based active material and the secondary battery may be significantly improved. Particularly, the negative electrode of the present invention may show excellent lifespan performance improvement in use in the high voltage range or high-loading negative electrode.

Negative electrode current collector (100)

The negative electrode current collector 100 is not particularly limited as long as the negative electrode current collector 100 does not cause chemical change in the battery and has high conductivity. Specifically, the negative electrode current collector 100 may include at least one kind of material selected from the group consisting of copper, stainless steel, aluminum, nickel, titanium, calcined carbon, and an aluminum-cadmium alloy and may specifically include copper.

The negative electrode current collector 100 may typically have a thickness of 3 um to 500 $\mu$m.

A fine unevenness may be formed on the negative electrode current collector 100 to reinforce coupling force of the negative electrode active material. For example, the negative electrode current collector 100 may be used in various shapes such as a film, a sheet, a foil, a net, a porous body, a foam, or a non-woven fabric.

First negative electrode active material layer (210)

The first negative electrode active material layer 210 is disposed on the negative electrode current collector 100. Specifically, the first negative electrode active material layer may be disposed on at least one surface of the negative electrode current collector, and more specifically, may be disposed on one or both surfaces of the negative electrode current collector.

The first negative electrode active material layer 210 includes a first carbon-based active material, a first silicon-based active material, and a first binder.

The first carbon-based active material may include at least one kind of material selected from the group consisting of artificial graphite, natural graphite, hard carbon, soft carbon, carbon black, graphene, and fibrous carbon and in particular may include at least one kind of material selected from the group consisting of artificial graphite and natural graphite.

An average particle diameter $D_{50}$ of the first carbon-based active material may be 5 um to 35 um, preferably 10 um to 20 $\mu$m, in terms of securing structural stability during charging and discharging and reducing a side reaction with the electrolyte.

The first carbon-based active material may be contained in the first negative electrode active material layer 210 in an amount of 65% to 98% by weight, specifically 80% to 95% by weight.

The first silicon-based active material may include a first silicon-based compound represented by the chemical formula of $SiO_x$ ($0 \leq x < 2$). The first silicon-based compound may be represented by the chemical formula of $SiO_x$ ($0 \leq x < 2$) and may be specifically represented by the chemical formula of $SiO_x$ ($0 < x < 2$). In the case of SiO2 (when x = 2), since reaction with lithium ions does not occur, and thus, lithium is not stored, x is preferably within the above range. Specifically, the first silicon-based compound may be represented by the chemical formula of $SiO_x$ ($0.5 \leq x \leq 1.5$).

More specifically, the first silicon-based active material may include a first silicon-based compound represented by the chemical formula of $SiO_x$ ($0 \leq x < 2$) and a first metal doped in the first silicon-based compound. In general, in the case of the silicon-based active material, due to an existence of an irreversible site in the silicon-based active material, there is a problem in that a portion of lithium moving to the negative electrode during initial charging does not return to the positive electrode during discharging, causing an irreversible reaction. In order to prevent this problem, the first metal may be doped into the first silicon-based compound to reduce an irreversible phase of the first silicon-based compound and improve efficiency.

The first metal may be doped into the first silicon-based compound. Particularly, the first metal may be doped into the first silicon-based compound and disposed inside and on a surface, or inside and on the surface of the first silicon-based compound. The first metal may be doped into the first silicon-based compound to form silicon oxide and metal silicate contained in the first silicon-based compound.

The first metal may include at least one kind of metal selected from the group consisting of Li, Mg, Ca, and Al. Specifically, the first metal may include at least one kind of metal selected from the group consisting of Li and Mg, more specifically Mg, in that a volume expansion control of silicon-based oxide particles, damage prevention, an initial efficiency improvement effect, etc. are implemented to an excellent level.

A weight of the first metal may be 1% to 30% by weight, specifically 5% to 20% by weight based on the total weight of the first silicon-based compound and the first metal. In the above range, it is possible to prevent capacity reduction due to excessive metal doping while sufficiently removing the irreversible capacity of the first silicon-based active material. A content of the first metal may be measured using ICP-AES (inductively coupled plasma atomic emission spectroscopy).

The first silicon-based active material may further include a carbon coating layer disposed on a surface thereof. The carbon coating layer may function as a protective layer that suppresses the volume expansion of the first silicon-based active material and prevents the side reaction with the electrolyte.

The carbon coating layer may be contained in an amount of 0.1% to 10% by weight, preferably 3% to 7% by weight in the first silicon-based active material, and when the carbon coating layer is within the above range, the volume expansion of the first silicon-based active material may be controlled to an excellent level, and the side reaction with the electrolyte may be prevented.

The carbon coating layer may be an amorphous carbon coating layer. Specifically, the carbon coating layer may be formed by chemical vapor deposition (CVD) using at least one kind of hydrocarbon gas selected from the group consisting of methane, ethane, and acetylene.

The average particle diameter $D_{50}$ of the first silicon-based active material may be 1 um to 15 $\mu$m, more preferably 2 um to 8 um in terms of securing structural stability of the active material during the charging and discharging, prevent a problem in which a volume expansion/contraction level increases as the particle diameter becomes excessively large, and reducing initial efficiency due to an excessively low particle diameter.

The first silicon-based active material may be contained in an amount of 1% to 20% by weight, specifically 3% to 15% by weight in the first negative electrode active material layer in order to secure sufficient capacity of the negative electrode while reducing the effect on the volume expansion of the first silicon-based active material.

When the first silicon-based active material includes the above-described first silicon-based active material and the first metal, a method for preparing the first silicon-based active material is not particularly limited. Specifically, the first silicon-based active material may be prepared by a method including: a process of vaporizing a compound represented by the chemical formula of $SiO_a$ ($0 \leq a < 2$) to generate first vapor; a process of vaporizing the first metal to generate second vapor; a process of mixing the first vapor and the second vapor to perform a vapor phase reaction; and a process of cooling the first metal after the gas phase reaction to obtain powder. In the preparation of the first silicon-based active material, a process of forming the carbon coating layer and a process of adjusting the average particle diameter $D_{50}$, which are well known in the art, may be added.

The first carbon-based active material and the first silicon-based active material may be contained in the first negative electrode active material layer 210 in an amount of 90% to 99% by weight, specifically 94% to 98% by weight. In addition, a weight ratio of the first carbon-based active material to the first silicon-based active material may be 83:17 to 99:1, specifically 88:12 to 93:7. In the above range, it is possible to secure sufficient capacity of the negative electrode while reducing the effect on the volume expansion of the silicon-based active material and realize the high-loading negative electrode.

The first binder is contained in the first negative electrode active material layer 210 in order to bind the negative electrode current collector to the first negative electrode active material layer 210 and bind the negative electrode active materials (first carbon-based active material and first silicon-based active material).

The first binder may include styrene-butadiene rubber (SBR). The styrene-butadiene rubber has a low electrolyte absorption rate to exhibit excellent adhesion even when the negative electrode and the secondary battery are impregnated in the electrolyte. Therefore, in the negative electrode of the present invention, the first binder may include the styrene-butadiene rubber to improve adhesion between the negative electrode current collector and the first negative electrode active material layer and prevent electrode deintercalation due to the volume expansion of the negative electrode active material, particularly the silicon-based active material contained in the first negative electrode active material layer.

The average particle diameter $D_{50}$ of the styrene-butadiene rubber may be 150 nm to 550 nm, specifically 200 nm to 400 nm, and more specifically 240 nm to 300 nm, and in the above-described range, a contact area between the first binder, the first carbon-based active material, the first silicon-based active material, and the negative electrode current collector may increase to an appropriate level to further improve the adhesion and prevent an excessive increase in electrolyte absorption rate, thereby reducing the thickness expansion of the negative electrode.

The first binder may be contained in the first negative electrode active material layer 210 in an amount of 0.5% to 15% by weight, specifically 2.5% to 8.0% by weight, and more specifically 3.5% to 4.5% by weight. In the above range, it is preferable in terms of preventing a rapid increase in resistance due to the excessive addition of the first binder together with exhibiting the sufficient adhesion.

The first negative electrode active material layer 210 may further include a first conductive material together with the first carbon-based active material, the first silicon-based active material, and the first binder.

The first conductive material may be used to improve conductivity of the first negative electrode active material layer 210, and preferably has conductivity without causing a chemical change. Specifically, the first conductive material may include at least one kind of material selected from the group consisting of natural graphite, artificial graphite, carbon black, acetylene black, ketjen black, channel black, furnace black, lamp black, thermal black, conductive fiber, single-wall carbon nanotube (SWCNT), multi-wall carbon nano tube (MWCNT), fluorocarbon, aluminum powder, nickel powder, zinc oxide, potassium titanate, titanium oxide, and polyphenylene derivatives, preferably may include at least one kind of material selected from a single-wall carbon nanotube and a multi-wall carbon nanotube in consideration of maintenance of the conductive network of the first silicon-based active material, and more specifically, a single-wall carbon nanotube.

The first conductive material may be contained in the first negative electrode active material layer 210 in an amount of 0.001% to 10% by weight, specifically, 0.01% to 1% by weight, and in the above range, it is preferable in terms of preventing overvoltage during the charging and preventing disconnection of the conductive network due to the volume expansion and contraction of the first silicon-based active material while improving the electrical conductivity of the surface of the first silicon-based active material.

The first negative electrode active material layer 210 may further include a thickener. The thickener may include carboxymethylcellulose (CMC).

The thickener may be contained in the first negative electrode active material layer 210 in an amount of 0.5% to 5% by weight, but is not limited thereto.

The first negative electrode active material layer 210 may have a thickness of 10 um to 100 um, specifically 15 um to 45 um. According to the present invention, even if the first negative electrode active material layer has a thickness within the above range, since the first negative electrode active material layer may have excellent adhesion and thickness expansion control performance, lifespan performance may be improved to an excellent level.

A loading amount of the first negative electrode active material layer 210 may be 1 mAh/cm$^2$ to 5 mAh/cm$^2$, specifically 2 mAh/cm2 to 4 mAh/cm$^2$. According to the present invention, even if the first negative electrode active material layer has a loading amount within the above range, since the first negative electrode active material layer may have excellent adhesion and thickness expansion control performance, lifespan performance may be improved to an excellent level.

Second negative electrode active material layer (220)

The second negative electrode active material layer 220 is disposed on the first negative electrode active material layer 210. If the first negative electrode active material layer is disposed on one surface or both surfaces of the negative electrode current collector, the second negative electrode active material layer 220 may also be disposed on one surface or both surfaces of the negative electrode current collector.

The second negative electrode active material layer 220 includes a second carbon-based active material, a second silicon-based active material, and a second binder.

The second carbon-based active material may include at least one kind of material selected from the group consisting of artificial graphite, natural graphite, hard carbon, soft carbon, carbon black, graphene, and fibrous carbon and in particular may include at least one kind of material selected from the group consisting of artificial graphite and natural graphite.

An average particle diameter $D_{50}$ of the second carbon-based active material may be 5 um to 35 um, preferably 10 um to 20 $\mu$m, in terms of securing structural stability during charging and discharging and reducing a side reaction with the electrolyte.

The second carbon-based active material may be contained in the second negative electrode active material layer 220 in an amount of 65% to 98% by weight, specifically 80% to 95% by weight.

The second silicon-based active material may include a second silicon-based compound represented by the chemical formula of $SiO_y$ (0≤y<2). The second silicon-based compound may be represented by the chemical formula of $SiO_y$ (0≤y<2) and may be specifically represented by the chemical formula of $SiO_y$ (0<y<2). In the case of SiO2 (when y = 2), since reaction with lithium ions does not occur, and thus, lithium is not stored, y is preferably within the above range. Specifically, the second silicon-based compound may be represented by the chemical formula of $SiO_y$ (0.5≤y≤1.5).

More specifically, the second silicon-based active material may include a second silicon-based compound represented by the chemical formula of $SiO_y$ (0≤y<2) and a second metal doped in the second silicon-based compound. The second metal may be doped into the second silicon-based compound to reduce an irreversible phase of the second silicon-based compound and improve efficiency.

The second metal is doped into the second silicon-based compound. Particularly, the second metal may be doped into the second silicon-based compound and disposed inside and on a surface, or inside and on the surface of the second silicon-based compound. The second metal may be doped into the second silicon-based compound to form silicon oxide and metal silicate contained in the second silicon-based compound.

The second metal may include at least one kind of metal selected from the group consisting of Li, Mg, Ca, and Al. Specifically, the second metal may include at least one kind of metal selected from the group consisting of Li and Mg, more specifically Mg, in that a volume expansion control of silicon-based oxide particles, damage prevention, an initial efficiency improvement effect, etc. are implemented to an excellent level.

A weight of the second metal may be 1% to 30% by weight, specifically 5% to 20% by weight based on the total weight of the second silicon-based compound and the second metal. In the above range, it is possible to prevent capacity reduction due to excessive metal doping while sufficiently removing the irreversible capacity of the second silicon-based active material. A content of the second metal may be measured using ICP-AES (inductively coupled plasma atomic emission spectroscopy).

The second silicon-based active material may further include a carbon coating layer disposed on a surface thereof. The carbon coating layer may function as a protective layer that suppresses the volume expansion of the second silicon-based active material and prevents the side reaction with the electrolyte.

The carbon coating layer may be contained in an amount of 0.1% to 10% by weight, preferably 3% to 7% by weight in the second silicon-based active material, and when the carbon coating layer is within the above range, the volume expansion of the second silicon-based active material may be controlled to an excellent level, and the side reaction with the electrolyte may be prevented.

The carbon coating layer may be an amorphous carbon coating layer. Specifically, the carbon coating layer may be formed by chemical vapor deposition (CVD) using at least one kind of hydrocarbon gas selected from the group consisting of methane, ethane, and acetylene.

The average particle diameter $D_{50}$ of the second silicon-based active material may be 1 um to 15 $\mu$m, more preferably 2 $\mu$m to 8 um in terms of securing structural stability of the active material during the charging and discharging, prevent a problem in which a volume expansion/contraction level increases as the particle diameter becomes excessively large, and reducing initial efficiency due to an excessively low particle diameter.

The second silicon-based active material may be contained in an amount of 1% to 20% by weight, specifically 3% to 15% by weight in the second negative electrode active material layer 220 in order to secure sufficient capacity of the negative electrode while reducing the effect on the volume expansion of the second silicon-based active material.

When the second silicon-based active material includes the above-described second silicon-based active material and the second metal, a method for preparing the second silicon-based active material is not particularly limited. Specifically, the second silicon-based active material may be prepared by a method including: a process of vaporizing a compound represented by the chemical formula of $SiO_b$ (0≤b<2) to generate first vapor; a process of vaporizing the second metal to generate second vapor; a process of mixing the first vapor and the second vapor to perform a vapor phase reaction; and a process of cooling the second metal after the gas phase reaction to obtain powder. In the preparation of the second silicon-based active material, a process of forming the carbon coating layer and a process of adjusting the average particle diameter $D_{50}$, which are well known in the art, may be added.

The second carbon-based active material and the second silicon-based active material may be contained in the second negative electrode active material layer 220 in an amount of 90% to 99% by weight, specifically 94% to 98% by weight. In addition, a weight ratio of the second carbon-based active material to the second silicon-based active material may be 83:17 to 99:1, specifically 88:12 to 93:7. In the above range, it is possible to secure sufficient capacity of the negative electrode while reducing the effect on the volume expansion of the silicon-based active material and realize the high-loading negative electrode.

The second binder is contained in the second negative electrode active material layer 220 in order to bind the first negative electrode active material layer 210 to the second negative electrode material layer 220 and bind the negative electrode active materials (second carbon-based active material and second silicon-based active material).

The second binder may include a copolymer including an acrylamide-derived unit, an acrylic acid-derived unit, and an acrylonitrile-derived unit. According to the negative electrode of the present invention, the second binder having high stiffness (tensile strength), strong adhesion, and flexibility at the same time may be provided in the second negative electrode active material layer, and thus, the negative electrode structure changes due to volume expansion of the negative electrode active material, particularly the silicon-based active material may be minimized to smoothly maintain the charging and discharging characteristics of the electrode.

Specifically, the acrylamide-derived unit contained in the second binder is advantageous in having excellent potential resistance and electrolyte resistance, increasing in cohesive force of the binder by hydrogen bonding when thermally cured together with the acrylic acid-derived unit, and preventing deformation of the electrode due to the excellent stiffness. The acrylonitrile-derived unit may have a crosslinking degree control function that alleviates brittleness due to the increase in stiffness by containing the acrylamide-derived unit and the acrylic acid-derived unit. Thus, the second binder may include the copolymer having the above-described characteristics to control the thickness expansion of the upper layer (the second negative electrode active material layer) to an excellent level and also properly control the degree of crosslinking so that the negative electrode is not broken due to the expansion of the negative electrode active material. If at least one of the acrylamide-derived unit, the acrylic acid-derived unit, or the acrylonitrile-derived unit contained in the copolymer is not contained, the adhesion or brittleness of the binder may increase excessively, and thus, it is difficult to achieve the above-described effect.

The acrylic acid-derived unit may be one in which at least a portion of hydrogen of the -OH group contained therein is substituted with Na or K. In this case, it is preferable in terms of increasing in solubility in a slurry solvent (e.g., water) and controlling viscosity of the slurry. Specifically, in the acrylic acid-derived unit, hydrogen of 1% to 40% of the -OH group in the number of -OH groups that are present may be substituted with Na or K.

Specifically, the second binder may include a copolymer containing 55% to 80% by weight of the acrylamide-derived unit, 10% to 30% by weight of the acrylic acid-derived unit, and 5% to 20% by weight of the acrylonitrile-derived unit. More specifically, the second binder may include a copolymer containing 65% to 72% by weight of the acrylamide-derived unit, 18% to 22% by weight of the acrylic acid-derived unit, and 7% to 15% by weight of the acrylonitrile-derived unit. The second binder may include a copolymer containing 67% to 72% by weight of the acrylamide-derived unit, 18% to 22% by weight of the acrylic acid-derived unit, and 7% to 13% by weight of the acrylonitrile-derived unit. The copolymer containing the acrylamide-derived unit, the acrylic acid-derived unit, and the acrylonitrile-derived unit within the above content range may better express the effect of simultaneously improving the adhesion and flexibility.

A glass transition temperature Tg of the copolymer contained in the second binder may be 50°C to 180°C, specifically 120°C to 160°C, and more specifically 128°C to 133°C. In the above range, it is preferable in that the second negative electrode active material layer is hardened while the thermal cross linking occurs due to thermal curing of the binder in the drying process.

The glass transition temperature Tg may be measured using a DSC device or the like. Such a DSC device includes a DSC (DSC823, METTLER TOLEDO) device, a DSC (TA Instrument) device, and the like.

The second binder may be contained in the second negative electrode active material layer 220 in an amount of 0.5% to 15% by weight, specifically 0.7% to 3.3% by weight, and more specifically 1.5% to 2.5% by weight. In the above range, it is preferable in terms of preventing a loss of the conductive network due to the volume expansion of the negative electrode active material while controlling the volume expansion of the negative electrode active material due to the charging and discharging.

The second negative electrode active material layer 220 may further include a second conductive material together with the second carbon-based active material, the second silicon-based active material, and the second binder.

The second conductive material may be used to improve conductivity of the second negative electrode active material layer, and preferably has conductivity without causing a chemical change. Specifically, the second conductive material may include at least one kind of material selected from the group consisting of natural graphite, artificial graphite, carbon black, acetylene black, ketjen black, channel black, furnace black, lamp black, thermal black, conductive fiber, single-wall carbon nanotube (SWCNT), multi-wall carbon nano tube (MWCNT), fluorocarbon, aluminum powder, nickel powder, zinc oxide, potassium titanate, titanium oxide, and polyphenylene derivatives, preferably may include at least one kind of material selected from a single-wall carbon nanotube and a multi-wall carbon nanotube in consideration of maintenance of the conductive network of the second silicon-based active material, and more specifically, a single-wall carbon nanotube.

The second conductive material may be contained in the second negative electrode active material layer 220 in an amount of 0.001% to 10% by weight, specifically 0.01% to 1% by weight. In the above range, it is preferable in terms of preventing a loss of the conductive network due to the volume expansion of the negative electrode active material while controlling the volume expansion of the negative electrode active material due to the charging and discharging.

The second negative electrode active material layer 220 may have a thickness of 10 um to 100 um, specifically 15 um to 45 um. According to the present invention, even if the second negative electrode active material layer 220 has a thickness within the above range, since the second negative electrode active material layer may have excellent adhesion and thickness expansion control performance, lifespan performance may be improved to an excellent level.

A loading amount of the second negative electrode active material layer 220 may be 1 mAh/cm$^2$ to 5 mAh/cm$^2$, specifically 2 mAh/cm$^2$ to 4 mAh/cm$^2$. According to the present invention, even if the second negative electrode active material layer has a loading amount within the above range, since the second negative electrode active material layer may have excellent adhesion and thickness expansion control performance, lifespan performance may be improved to an excellent level.

In the present invention, a ratio of the weight percentage of the first binder to the weight of the first negative electrode active material layer 210 and the weight percentage of the second binder to the weight of the second negative electrode active material layer 220 may be 0.5:1 to 9:1, specifically 0.8:1 to 6:1, and more specifically 1.5:1 to 3:1. In general, when preparing a single-layer negative electrode, there is a problem that the binder is unevenly distributed on an upper portion of the negative electrode (portion that is in contact with the separator) and the adhesion of the entire negative electrode decreases. However, the ratios of the first binder and the second binder may be adjusted within the above range. In this case, the adhesion of the entire negative electrode may be further improved.

The total weight of the first binder and the second binder may be 0.5% to 15% by weight, specifically, 1% by weight to 8% by weight, more specifically from 1.5% to 5.0% by weight, based on the total weight of the first negative electrode active material layer 210 and the second negative electrode active material layer 220. In the above range, it is preferable that it is possible to implement the negative electrode having the excellent capacity together with the above-described effect of improving the adhesion and controlling the thickness expansion of the negative electrode.

A ratio of the thickness of the first negative electrode active material layer 210 to the thickness of the second negative electrode active material layer 220 may be 1:0.5 to 1:2, specifically 1:0.8 to 1:1.3. In the above range, it is preferable in terms of easiness of the slurry coating process in preparing the negative electrode, improvement of the adhesion of the negative electrode, control of the thickness expansion, and improvement of the overall charging and discharging performance of the negative electrode.

The sum of the loading amount of the first negative electrode active material layer 210 and the loading amount of the second negative electrode active material layer 220 may be 4 mAh/cm$^2$ to 8 mAh/cm$^2$, specifically 4.0 mAh/cm$^2$ to 7.5 mAh/cm$^2$, more specifically 4 mAh/cm$^2$ to 7 mAh/cm$^2$. According to the present invention, in even the high-loading negative electrode as described above, a high level of the adhesion, a cell thickness expansion control effect, and high lifespan performance may be realized.

The ratio of the loading amount of the first negative electrode active material layer 210 to the loading amount of the second negative electrode active material layer 220 may be 1:0.5 to 1:2, specifically 1:0.8 to 1:1.3. In the above range, it is preferable in that the overall charging/discharging performance, the adhesion, and the thickness expansion control effect of the negative electrode are simultaneously improved.

The electrode density of the entirety of the first negative electrode active material layer 210 and the second negative electrode active material layer 220 may be 1.4 g/cc to 2.0 g/cc, specifically 1.5 g/cc to 1.9 g/cc, more specifically 1.6 g/cc to 1.8 g/cc. According to the present invention, the excellent lifespan performance may be exhibited even at the high electrode density and energy density.

The preparation of the negative electrode is not particularly limited as long as it is possible to implement the first negative electrode active material layer and the second negative electrode active material layer having the above-described characteristics. For example, slurry for the first negative electrode active material layer may be prepared by dispersing the first carbon-based active material, the first silicon-based active material, the first binder, the first conductive material, and/or the thickener in the solvent (e.g., water). After preparing slurry for the second negative electrode active material layer by dispersing the second carbon-based active material, the second silicon-based active material, the second binder, and/or the second conductive material in the solvent (e.g., water), the above-described materials may be applied to the negative electrode current collector to prepare the negative electrode according to the present invention. More specifically, the slurry for the first negative electrode active material layer prepared above may be applied to the negative electrode current collector, rolled, and dried to form the first negative electrode active material layer, and the slurry for the second negative electrode active material layer prepared above may be applied to the first negative electrode active material layer, rolled, and dried to form the second negative electrode active material layer, thereby preparing the negative electrode according to the present invention. While applying the slurry for the first negative electrode active material layer to the negative electrode current collector, the slurry for the second negative electrode active material layer may be substantially simultaneously applied to the applied slurry for the first negative electrode active material layer, rolled, and dried to prepare the negative electrode according to the present invention.

**<Secondary battery>**

In addition, the present invention provides a secondary battery, specifically a lithium secondary battery, including the negative electrode described above. Specifically, the secondary battery includes the above-described negative electrode; a positive electrode facing the negative electrode; a separator interposed between the negative electrode and the positive electrode; and an electrolyte.

Description of the negative electrode is as described above.

The positive electrode may include a positive electrode current collector; and a positive electrode active material layer disposed on the positive electrode current collector.

The positive electrode current collector is not particularly limited as long as the positive electrode current collector does not cause a chemical change in the battery and has high conductivity. Specifically, the positive electrode current collector may include at least one kind of material selected from the group consisting of copper, stainless steel, aluminum, nickel, titanium, calcined carbon, and an aluminum-cadmium alloy, and may specifically include aluminum.

The positive electrode current collector may typically have a thickness of 3 um to 500 $\mu$m.

A fine unevenness may be formed on the positive electrode current collector to reinforce coupling force of the positive electrode active material. For example, the positive electrode current collector may be used in various shapes such as a film, sheet, foil, net, porous material, foam, or non-woven fabric.

The positive electrode active material layer may be disposed on the positive electrode current collector and specifically may be disposed on one surface or both surfaces of the positive electrode current collector.

The positive electrode active material layer may include a positive electrode active material.

The positive electrode active material may be a compound capable of reversible intercalation and deintercalation of lithium, and specifically, a lithium transition metal composite oxide containing lithium and at least one kind of transition metal composed of nickel, cobalt, manganese, and aluminum, preferably, a lithium transition metal composite oxide containing lithium and a transition metal including nickel, cobalt, and manganese.

More specifically, the lithium transition metal composite oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$), lithium-nickel-manganese-based oxide (e.g., $LiNi_{1-Y}Mn_YO_2$ (where, 0<Y<1), $LiMn_{2-z}Ni_zO_4$ (where, 0<Z<2), etc.), lithium-nickel-cobalt-based oxide (e.g., $LiNi_{1-Y1}Co_{Y1}O_2$ (where, 0<Y1<1), etc.), lithium-manganese-cobalt-based oxides (e.g., $LiCo_{1-Y2}Mn_{Y2}O_2$ (where, 0<Y2<1), $LiMn_{2-z1}Co_{z1}O_4$ (where, 0<Z1<2), etc.), lithium-nickel-manganese-cobalt-based oxide (e.g., $Li(Ni_pCo_qMn_{r1})O_2$ (where, 0<p<1, 0<q<1, 0<r1<1, p+q+r1=1) or $Li(Ni_{p1}Co_{q1}Mn_{r2})O_4$ (where, 0<p1<2, 0<q1<2, 0<r2<2, p1+q1+r2=2), etc.); lithium-nickel-cobalt-transition metal (M) oxide (e.g. $Li(Ni_{p2}Co_{q2}Mn_{r3}M_{S2})O_2$, where M is selected from the group consisting of Al, Fe, V, Cr, Ti, Ta, Mg and Mo; p2, q2, r3, and s2 are atomic fractions of independent elements, respectively, 0<p2<1, 0<q2<1, 0<r3<1, 0<s2<1, p2+q2+r3+s2=1) etc.), and any one or two or more thereof. Among them, the lithium transition metal composite oxide may be $LiCoO_2$, $Li MnO_2$, $LiNiO_2$, lithium nickel-manganese-cobalt oxide (e.g., $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ or $Li(Ni_{0.8}Mn_{0.1}Co_{0.1})O_2$, etc.), or lithium nickel cobalt aluminum oxide (e.g., $Li(Ni_{0.8}Co_{0.15}Al_{0.05})O_2$, etc.) or the like in that the capacity characteristics and stability of the battery are improved. More specifically, the positive electrode active material may include a lithium-cobalt-based oxide.

The lithium-cobalt-based oxide may exhibit excellent stability even in a high voltage range, for example, a charging voltage of 4.4V or higher. Particularly, when the negative electrode according to the present invention and the positive electrode including lithium-cobalt-based oxide are combined with each other, the excellent lifespan performance may be exhibited at the high charging voltage.

The average particle diameter $D_{50}$ of the positive electrode active material may be 10 um to 30 um, specifically 15 um to 20 um. In the above range, it is preferable in terms of achieving high positive electrode energy density and preventing cracks or breakage of the positive electrode active material.

The positive electrode active material may be contained in an amount of 80% to 99% by weight, preferably 92% to 98% by weight in the positive electrode active material layer in consideration of exhibiting the sufficient capacity of the positive electrode active material.

The positive electrode active material layer may further include a positive electrode binder and a positive electrode conductive material together with the positive electrode active material.

The positive electrode binder may be a component that assists in the binding of the active material and the conductive material and the binding to the collector, and specifically may include at least one kind of material selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, Ethylene-propylene-diene terpolymer (EPDM), sulfonated EPDM, styrene-butadiene rubber, and fluoro rubber, preferably, polyvinylidene fluoride.

The positive electrode binder may be contained in an amount of 0.1% to 10% by weight, preferably 0.1% to 3% by weight, more specifically 0.5% to 2.5% by weight in the positive electrode active material layer in terms of sufficiently securing binding force between the components such as the positive electrode active material.

The positive electrode conductive material may be used to assist and improve conductivity of the secondary battery, and is not particularly limited as long as the positive electrode conductive material has conductivity without causing a chemical change. Specifically, the conductive material may include at least one kind of material selected from the group consisting of graphite such as natural graphite and artificial graphite; carbon black such as carbon black, acetylene black, ketjen black, channel black, furnace black, lamp black, and thermal black; conductive fibers such as carbon fibers and metal fibers; carbon nanotubes such as single-wall carbon nanotubes and multi-wall carbon nanotubes; fluorocarbons; metal powders such as aluminum and nickel powder; conductive whiskers such as zinc oxide and potassium titanate; conductive metal oxides such as titanium oxide; and polyphenylene derivatives, specifically, carbon black and carbon nanotubes, more specifically, carbon black and multi-wall carbon nanotubes in terms of improving the conductivity.

The positive electrode conductive material may be contained in an amount of 0.1 wt% to 10 wt%, specifically 0.1 wt% to 3.0 wt%, and more specifically 0.5 wt% to 2.5 wt% in the positive electrode active material layer in order to sufficiently secure electrical conductivity.

A thickness of the positive electrode active material layer may be 30 um to 400 um, preferably 50 um to 200 $\mu$m.

A loading amount of the positive electrode active material layer may be 3.5 mAh/cm$^2$ to 7.5 mAh/cm$^2$, specifically 4.5 mAh/cm$^2$ to 6.5 mAh/cm$^2$.

The positive electrode may be prepared by applying positive electrode slurry including the positive electrode active material and optionally the binder, the conductive material, and the solvent for forming the positive electrode slurry to the positive electrode current collector, and then drying and rolling the positive electrode current collector coated with the positive electrode slurry.

The solvent for forming the positive electrode slurry may include an organic solvent such as NMP (N-methyl-2-pyrrolidone) and may be used in an amount that has desired viscosity when containing the positive electrode active material, and optionally the binder and the conductive material. For example, the solvent for forming the positive electrode slurry may be contained in the positive electrode slurry so that a concentration of the solid content including the positive electrode active material and optionally the binder and the conductive material is 50% to 95% by weight, preferably 70% to 90% by weight.

In the secondary battery of the present invention, an N/P ratio calculated by Equation 1 below may be 1.0 to 1.5, preferably 1.0 to 1.2.

N/P ratio = {(discharging capacity per unit area of the negative electrode) / (discharging capacity per unit area of the positive electrode)}.

In the above range, the high capacity and charging characteristics of the silicon-based active material may be exhibited, and the lifespan characteristics of the secondary battery may be further improved by minimizing the effect of the volume expansion/contraction of the silicon-based active material on the battery.

Specifically, the discharging capacity per unit area of the negative electrode may be obtained by the following method. The same negative electrode sample as the negative electrode used first is prepared. A coin-type half-cell including the negative electrode sample, a lithium metal counter electrode facing the negative electrode, a separator interposed between the negative electrode and the lithium metal counter electrode, and an electrolyte is prepared to obtain the discharging capacity. The discharging capacity per unit area of the negative electrode may be obtained by dividing the discharging capacity by the area of the negative electrode sample.

In addition, the discharging capacity per unit area of the positive electrode may be obtained by the following method. The same positive electrode sample as the positive electrode used first is prepared. A coin-type half-cell including the positive electrode sample, a lithium metal counter electrode facing the positive electrode, a separator interposed between the positive electrode and the lithium metal counter electrode, and an electrolyte is prepared to obtain the discharging capacity. The discharging capacity per unit area of the positive electrode may be obtained by dividing the discharging capacity by the area of the positive electrode sample.

The separator may separate the negative electrode from the positive electrode and provide a passage for movement of lithium ions and may be used without particular limitation as long as it is normally used as a separator in a lithium secondary battery, and in particular, it is preferable to have low resistance to ion movement of the electrolyte and excellent ability to absorb the electrolyte. Particularly, the separator may include a porous polymer film, for example, made of a polyolefin-based polymer such as an ethylene homopolymer, a propylene homopolymer, an ethylene/butene copolymer, an ethylene/hexene copolymer, and an ethylene/methacrylate copolymer or at least two-layered stack structure thereof. In addition, the separator may be a typical porous non-woven fabric, for example, a non-woven fabric made of glass fiber with a high melting point, or polyethylene terephthalate fiber. In addition, an applied separator containing a ceramic component or a polymer material may be used to secure heat resistance or mechanical strength and may be selectively used in a single layer or multilayer structure.

In addition, the electrolyte used in the present invention may include an organic liquid electrolyte, an inorganic liquid electrolyte, a solid polymer electrolyte, a gel polymer electrolyte, a solid inorganic electrolyte, and a molten inorganic electrolyte that are capable of being used in the manufacture of a secondary battery, but is not limited thereto.

Specifically, the electrolyte may include an organic solvent and a lithium salt.

The organic solvent may be used without particular limitation as long as it serves as a medium through which ions involved in the electrochemical reaction of the battery move. Specifically, examples of the organic solvent may include ester solvents such as methyl acetate, ethyl acetate, gamma-butyrolactone, and ε-caprolactone; ether solvents such as dibutyl ether or tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), ethyl methyl carbonate (EMC), ethylene carbonate (EC), and propylene carbonate (PC); alcohol solvents such as ethyl alcohol and isopropyl alcohol; nitriles such as R-CN (R is a C2 to C20 straight-chain, branched or cyclic hydrocarbon group, and may include a double-bonded aromatic ring or an ether bond) ; amides such as dimethylformamide; dioxolanes such as 1,3-dioxolane; or sulfolanes. Among them, carbonate-based solvents are preferable, and a mixture of cyclic carbonates (e.g., ethylene carbonate or propylene carbonate, etc.) having high ionic conductivity and high permittivity and low-viscosity linear carbonate-based compounds (e.g., ethyl methyl carbonate, dimethyl carbonate, or diethyl carbonate), the mixture being able to increase charging and discharging performance of the battery, is more preferable. In this case, when the cyclic carbonate and the chain carbonate are mixed in a volume ratio of about 1:1 to about 1:9, the performance of the electrolyte may be excellent.

The lithium salt may be used without particular limitation as long as it is a compound capable of providing lithium ions used in the lithium secondary battery. Specifically, the lithium salt may include LiPF6, LiClO$_4$, LiAsF$_6$, LiBF4, LiSbF$_6$, LiAlO$_4$, LiAlCl$_4$, LiCF$_3$SO$_3$, LiC$_4$F$_9$SO$_3$, LiN(C$_2$F$_5$SO$_3$)$_2$, LiN(C$_2$F$_5$SO$_2$)$_2$, LiN(CF$_3$SO$_2$)$_2$, LiCl, LiI, or LiB (C$_2$O$_4$)$_2$, or the like. A concentration of the lithium salt is preferably used within the range of 0.1 M to 2.0M. When the concentration of the lithium salt is within the above range, the electrolyte has appropriate conductivity and viscosity, and thus, excellent electrolyte performance may be exhibited, and the lithium ions may move effectively.

The secondary battery may further include a battery case accommodating the negative electrode, the positive electrode, the separator, and the electrolyte.

The secondary battery may be manufactured by accommodating the electrode assembly with the separator interposed between the negative electrode and the positive electrode in the battery case and injecting an electrolyte according to the typical method for manufacturing the secondary battery.

**<Battery system>**

In addition, the present invention provides a battery system including the secondary battery described above.

Specifically, the battery system includes the above-described secondary battery and a control unit capable of setting a voltage range during the charging and discharging of the secondary battery.

Description of the secondary battery is as described above.

The control unit is not particularly limited as long as it may control the voltage range during the charging and discharging of the secondary battery, and may be, for example, an electrochemical charger/discharger. Specifically, the control unit may be embedded in a battery management system (BMS) provided in a battery pack.

The voltage range by the control unit may be set to satisfy Equation 2 below.

[Equation 2]

$$0.60 \leq (V_{max} - X)/ Y \leq 0.67$$

In Equation 2, $V_{max}$ is a maximum voltage set by the control unit, Y is a value calculated by the formula $V_{max}$ - $V_{min}$/1.47. Where $V_{min}$ is a minimum voltage set by the control unit, and X is an average voltage when the secondary battery is charged and discharged with $V_{max}$ and $V_{min}$.

In Equation 2, the $V_{max}$ may be 4.4 V to 4.6 V, specifically 4.40 V to 4.55 V, and the $V_{min}$ may be 2.8 V to 3.3 V, specifically 3.0 V to 3.3 V. According to the present invention, since the secondary battery exhibits the high lifespan performance even when used at the high voltage, it is possible to implement the battery system having the excellent lifespan performance within the above ranges of $V_{max}$ and $V_{min}$.

Hereinafter, Examples of the present invention will be described in detail in such a manner that the technical idea of the present invention may easily be carried out by a person with ordinary skill in the art to which the invention pertains. The present invention may, however, be embodied in different forms and should not be construed as limited to the Examples set forth herein.

## Example

Example 1: Manufacture of negative electrode and secondary battery

1. Manufacture of negative electrode

<Preparation of first silicon-based active material and second silicon-based active material>

A silicon-based active material in which Mg is doped in SiO, and which has a carbon coating layer on a surface there of was prepared. An average particle diameter $D_{50}$ of the silicon-based active material was 8.5 um, the carbon coating layer was contained in an amount of 4% by weight of the silicon-based active material, and Mg was doped in an amount of 9% by weight in the silicon-based active material.

A first silicon-based active material and a second silicon-based active material, which are described later, were used as the silicon-based active material.

<Preparation of slurry for first negative electrode active material layer>

Artificial graphite (average particle diameter $D_{50}$: 18 um) as a first carbon-based active material, a first silicon-based active material, styrene butadiene rubber (SBR) (average particle diameter $D_{50}$: 215 nm) as a first binder, carboxymethylcellulose (CMC) as a thickener, and a single-wall carbon nanotube (SWCNT) as the first conductive material were mixed at a weight ratio of 86.1: 9.6: 3.0: 1.0: 0.3, and added to water as a slurry solvent for the first negative electrode active material layer to prepare slurry for the first negative electrode active material layer.

Here, the single-wall carbon nanotube (SWCNT) was added to the slurry solvent for the first negative electrode active material layer in the form of a dispersion solution.

<Preparation of slurry for second negative electrode active material layer>

Artificial graphite (average particle diameter $D_{50}$: 18 um) as a second carbon-based active material, a copolymer containing 70% by weight of acrylamide-derived units, 20% by weight of acrylic acid-derived units, and 10% by weight of acrylonitrile-derived units as a second binder, and a single-wall carbon nanotube (SWCNT) as the second conductive material were mixed at a weight ratio of 87.0: 9.7: 3.0: 0.3, and added to water as a slurry solvent for the second negative electrode active material layer to prepare slurry for the second negative electrode active material layer.

Here, the single-wall carbon nanotube (SWCNTs) was added to the slurry solvent for the second negative electrode active material layer in the form of a dispersion solution.

A glass transition temperature Tg of the copolymer used as the second binder was 130°C.

In addition, as the acrylic acid-derived unit contained in the copolymer, an acrylic acid-derived unit where 30% of -OH group hydrogens among the existing -OH groups was substituted with Na was used.

<Formation of first and second negative electrode active material layers>

While applying the slurry for the first negative electrode active material layer prepared above to copper foil (thickness: 6 um) as the negative electrode current collector, the slurry for the second negative electrode active material layer prepared above was substantially simultaneously applied on the applied slurry for the first negative electrode active material layer, roll-pressed, and dried in a vacuum oven at 130°C for 10 hours to prepare the negative electrode in which the negative electrode current collector, the first negative electrode active material layer, and the second negative electrode active material layer are sequentially stacked.

A ratio of a weight ratio of the first binder of the first negative electrode active material layer (3% by weight, based on 100% by weight of the first negative electrode active material layer) and a weight ratio of the second binder of the second negative electrode active material layer (3% by weight, based on 100% by weight of the second negative electrode active material layer) was about 1:1.

The total weight of the first binder and the second binder was 3% by weight based on the total weight of the first negative electrode active material layer and the second negative electrode active material layer.

A loading amount of the first negative electrode active material layer was 2.72 mAh/cm$^2$, a loading amount of the second negative electrode active material layer was 2.75 mAh/cm$^2$, and the sum of the loading amounts of the first negative electrode active material layer and the second negative electrode active material layer was 5.47 mAh/cm$^2$.

A thickness of the first negative electrode active material layer was 31.75 $\mu$m, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

$LiCoO_2$ (average particle diameter $D_{50}$: 16.5$\mu$m) as the positive electrode active material, a mixture of carbon black and multi-wall carbon nanotube at a weight ratio of 1:0.5 as the conductive material, and polyvinylidene fluoride (PVdF) as the binder were added at a weight ratio of 96: 1.5: 1.5 to N-methyl-2-pyrrolidone (NMP) as the solvent for forming the positive electrode slurry to prepare the positive electrode slurry.

The positive electrode slurry was applied on an aluminum current collector (thickness: 10 um) as the positive electrode current collector at a loading amount of 5.2 mAh/cm 2, roll-pressed, and dried in a vacuum oven at 130°C for 10 hours to form a positive electrode active material layer (thickness: 63.5 um), thereby manufacturing the positive electrode.

The secondary battery according to Example 1 was manufactured by interposing a polyethylene separator between the negative electrode and the positive electrode prepared above, and injecting an electrolyte. A mixture in which 3% by weight of vinylene carbonate is added to an organic solvent in which fluoroethylene carbonate (FEC), ethylene carbonate (EC), and ethyl propionate (EP) are mixed in a volume ratio of 20:20:60, and LiPF6 as the lithium salt is added at a concentration of 1 mol/L was used as the electrolyte.

The N/P ratio of the secondary battery according to Example 1 was 1.07.

Example 2: Manufacture of negative electrode and secondary battery

1. Manufacture of negative electrode

<Preparation of slurry for first negative electrode active material layer>

Slurry for the first negative electrode active material layer was prepared in the same method as in Example 1 except that a first carbon-based active material, a first silicon-based active material, a first binder, a thickener, and a first conductive material are mixed at a weight ratio of 85.2: 9.5: 4.0: 1.0: 0.3.

<Preparation of slurry for second negative electrode active material layer>

Slurry for the second negative electrode active material layer was prepared in the same method as in Example 1 except that a second carbon-based active material, a second silicon-based active material, a second binder, and a second conductive material are mixed at a weight ratio of 87.9: 9.8: 2.0: 0.3.

<Formation of first and second negative electrode active material layers>

While applying the slurry for the first negative electrode active material layer prepared above to copper foil (thickness: 6 um) as the negative electrode current collector, the slurry for the second negative electrode active material layer prepared above was substantially simultaneously applied on the applied slurry for the first negative electrode active material layer, roll-pressed, and dried in a vacuum oven at 130°C for 10 hours to prepare the negative electrode in which the negative electrode current collector, the first negative electrode active material layer, and the second negative electrode active material layer are sequentially stacked.

A ratio of a weight ratio of the first binder of the first negative electrode active material layer (4% by weight, based on 100% by weight of the first negative electrode active material layer) and a weight ratio of the second binder of the second negative electrode active material layer (2% by weight, based on 100% by weight of the second negative electrode active material layer) was about 2:1.

The total weight of the first binder and the second binder was 3% by weight based on the total weight of the first negative electrode active material layer and the second negative electrode active material layer.

A loading amount of the first negative electrode active material layer was 2.69 mAh/cm², a loading amount of the second negative electrode active material layer was 2.78 mAh/cm², and the sum of the loading amounts of the first negative electrode active material layer and the second negative electrode active material layer was 5.47 mAh/cm².

A thickness of the first negative electrode active material layer was 31.75 um, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same manner as in Example 1 except that the negative electrode prepared above is used.

The N/P ratio of the secondary battery according to Example 2 was 1.07.

Example 3: Manufacture of negative electrode and secondary battery

1. Manufacture of negative electrode

<Preparation of slurry for first negative electrode active material layer>

Slurry for the first negative electrode active material layer was prepared in the same method as in Example 1 except that a first carbon-based active material, a first silicon-based active material, a first binder, a thickener, and a first conductive material are mixed at a weight ratio of 84.3: 9.4: 5.0: 1.0: 0.3.

<Preparation of slurry for second negative electrode active material layer>

Slurry for the second negative electrode active material layer was prepared in the same method as in Example 1 except that a second carbon-based active material, a second silicon-based active material, a second binder, and a second conductive material are mixed at a weight ratio of 88.8: 9.9: 1.0: 0.3.

<Formation of first and second negative electrode active material layers>

While applying the slurry for the first negative electrode active material layer prepared above to copper foil (thickness: 6 um) as the negative electrode current collector, the slurry for the second negative electrode active material layer prepared above was substantially simultaneously applied on the applied slurry for the first negative electrode active material layer, roll-pressed, and dried in a vacuum oven at 130°C for 10 hours to prepare the negative electrode in which the negative electrode current collector, the first negative electrode active material layer, and the second negative electrode active material layer are sequentially stacked.

A ratio of a weight ratio of the first binder of the first negative electrode active material layer (5% by weight, based on 100% by weight of the first negative electrode active material layer) and a weight ratio of the second binder of the second negative electrode active material layer (1% by weight, based on 100% by weight of the second negative electrode active material layer) was about 5:1.

The total weight of the first binder and the second binder was 3% by weight based on the total weight of the first negative electrode active material layer and the second negative electrode active material layer.

A loading amount of the first negative electrode active material layer was 2.66 mAh/cm$^2$, a loading amount of the second negative electrode active material layer was 2.81 mAh/cm$^2$, and the sum of the loading amounts of the first negative electrode active material layer and the second negative electrode active material layer was 5.47 mAh/cm$^2$.

A thickness of the first negative electrode active material layer was 31.75 um, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same manner as in Example 1 except that the negative electrode prepared above is used.

The N/P ratio of the secondary battery according to Example 3 was 1.07.

Example 4: Manufacture of negative electrode and secondary battery

1. Manufacture of negative electrode

<Preparation of slurry for first negative electrode active material layer>

Slurry for the first negative electrode active material layer was prepared in the same method as in Example 1 except that a first carbon-based active material, a first silicon-based active material, a first binder, a thickener, and a first conductive material are mixed at a weight ratio of 86.7: 9.6: 2.4: 1.0: 0.3.

<Preparation of slurry for second negative electrode active material layer>

Slurry for the second negative electrode active material layer was prepared in the same method as in Example 1 except that a second carbon-based active material, a second silicon-based active material, a second binder, and a second conductive material are mixed at a weight ratio of 86.5: 9.6: 3.6: 0.3.

<Formation of first and second negative electrode active material layers>

While applying the slurry for the first negative electrode active material layer prepared above to copper foil (thickness: 6 um) as the negative electrode current collector, the slurry for the second negative electrode active material layer prepared above was substantially simultaneously applied on the applied slurry for the first negative electrode active material layer, roll-pressed, and dried in a vacuum oven at 130°C for 10 hours to prepare the negative electrode in which the negative electrode current collector, the first negative electrode active material layer, and the second negative electrode active material layer are sequentially stacked.

A ratio of a weight ratio of the first binder of the first negative electrode active material layer (2.4% by weight, based on 100% by weight of the first negative electrode active material layer) and a weight ratio of the second binder of the second negative electrode active material layer (3.6% by weight, based on 100% by weight of the second negative electrode active material layer) was about 0.67:1.

The total weight of the first binder and the second binder was 3.0% by weight based on the total weight of the first negative electrode active material layer and the second negative electrode active material layer.

A loading amount of the first negative electrode active material layer was 2.74 mAh/cm$^2$, a loading amount of the second negative electrode active material layer was 2.73 mAh/cm$^2$, and the sum of the loading amounts of the first negative electrode active material layer and the second negative electrode active material layer was 5.47 mAh/cm$^2$.

A thickness of the first negative electrode active material layer was 31.75 $\mu$m, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same manner as in Example 1 except that the negative electrode prepared above is used.

The N/P ratio of the secondary battery according to Example 4 was 1.07.

Example 5: Manufacture of negative electrode and secondary battery

1. Manufacture of negative electrode

<Preparation of slurry for first negative electrode active material layer>

Slurry for the first negative electrode active material layer was prepared in the same method as in Example 2 except that the average particle diameter $D_{50}$ of the styrene-butadiene rubber used as the first binder is adjusted to 180 nm.

<Preparation of slurry for second negative electrode active material layer>

Slurry for the second negative electrode active material layer was prepared in the same method as in Example 2.

<Formation of first and second negative electrode active material layers>

A negative electrode was manufactured in the same method as in Example 2 except that the slurry for the first negative electrode active material layer and the slurry for the second negative electrode active material layer prepared above are used.

A ratio of a weight ratio of the first binder of the first negative electrode active material layer (4% by weight, based on 100% by weight of the first negative electrode active material layer) and a weight ratio of the second binder of the second negative electrode active material layer (2% by weight, based on 100% by weight of the second negative electrode active material layer) was about 2:1.

The total weight of the first binder and the second binder was 3% by weight based on the total weight of the first negative electrode active material layer and the second negative electrode active material layer.

A loading amount of the first negative electrode active material layer was 2.69 mAh/cm$^2$, a loading amount of the second negative electrode active material layer was 2.78 mAh/cm$^2$, and the sum of the loading amounts of the first negative electrode active material layer and the second negative electrode active material layer was 5.47 mAh/cm$^2$.

A thickness of the first negative electrode active material layer was 31.75 um, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same method as in Example 2 except that the negative electrode prepared above is used.

The N/P ratio of the secondary battery according to Example 5 was 1.07.

Example 6: Manufacture of negative electrode and secondary battery

1. Manufacture of negative electrode

<Preparation of slurry for first negative electrode active material layer>

Slurry for the first negative electrode active material layer was prepared in the same method as in Example 2 except that the average particle diameter $D_{50}$ of the styrene-butadiene rubber used as the first binder is adjusted to 270 nm.

<Preparation of slurry for second negative electrode active material layer>

Slurry for the second negative electrode active material layer was prepared in the same method as in Example 2.

<Formation of first and second negative electrode active material layers>

A negative electrode was manufactured in the same method as in Example 2 except that the slurry for the first negative electrode active material layer and the slurry for the second negative electrode active material layer prepared above are used.

A ratio of a weight ratio of the first binder of the first negative electrode active material layer (4% by weight, based on 100% by weight of the first negative electrode active material layer) and a weight ratio of the second binder of the second negative electrode active material layer (2% by weight, based on 100% by weight of the second negative electrode active material layer) was about 2:1.

The total weight of the first binder and the second binder was 3% by weight based on the total weight of the first negative electrode active material layer and the second negative electrode active material layer.

A loading amount of the first negative electrode active material layer was 2.69 mAh/cm$^2$, a loading amount of the second negative electrode active material layer was 2.78 mAh/cm$^2$, and the sum of the loading amounts of the first negative electrode active material layer and the second negative electrode active material layer was 5.47 mAh/cm$^2$.

A thickness of the first negative electrode active material layer was 31.75 um, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same method as in Example 2 except that the negative electrode prepared above is used.

The N/P ratio of the secondary battery according to Example 6 was 1.07.

Example 7: Manufacture of negative electrode and secondary battery

1. Manufacture of negative electrode

<Preparation of slurry for first negative electrode active material layer>

Slurry for the first negative electrode active material layer was prepared in the same method as in Example 2 except that the average particle diameter $D_{50}$ of the styrene-butadiene rubber used as the first binder is adjusted to 500 nm.

<Preparation of slurry for second negative electrode active material layer>

Slurry for the second negative electrode active material layer was prepared in the same method as in Example 2.

<Formation of first and second negative electrode active material layers>

A negative electrode was manufactured in the same method as in Example 2 except that the slurry for the first negative electrode active material layer and the slurry for the second negative electrode active material layer prepared above are used.

A ratio of a weight ratio of the first binder of the first negative electrode active material layer (4% by weight, based on 100% by weight of the first negative electrode active material layer) and a weight ratio of the second binder of the second negative electrode active material layer (2% by weight, based on 100% by weight of the second negative electrode active material layer) was about 2:1.

The total weight of the first binder and the second binder was 3% by weight based on the total weight of the first negative electrode active material layer and the second negative electrode active material layer.

A loading amount of the first negative electrode active material layer was 2.69 mAh/cm$^2$, a loading amount of the second negative electrode active material layer was 2.78 mAh/cm$^2$, and the sum of the loading amounts of the first negative electrode active material layer and the second negative electrode active material layer was 5.47 mAh/cm$^2$.

A thickness of the first negative electrode active material layer was 31.75 $\mu$m, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same method as in Example 2 except that the negative electrode prepared above is used.

The N/P ratio of the secondary battery according to Example 7 was 1.07.

Example 8: Manufacture of negative electrode and secondary battery

<Preparation of slurry for first negative electrode active material layer>

Slurry for the first negative electrode active material layer was prepared in the same method as in Example 2.

<Preparation of slurry for second negative electrode active material layer>

Slurry for the second negative electrode active material layer was prepared in the same method as in Example 2 except that a copolymer (glass transition temperature Tg: 124°C) containing 60% by weight of acrylamide-derived units, 25% by weight of acrylic acid-derived units, and 15% by weight of acrylonitrile-derived units is used as the second binder.

<Formation of first and second negative electrode active material layers>

A negative electrode was manufactured in the same method as in Example 2 except that the slurry for the first negative electrode active material layer and the slurry for the second negative electrode active material layer prepared above are used.

A ratio of a weight ratio of the first binder of the first negative electrode active material layer (4% by weight, based on 100% by weight of the first negative electrode active material layer) and a weight ratio of the second binder of the second negative electrode active material layer (2% by weight, based on 100% by weight of the second negative electrode active material layer) was about 2:1.

The total weight of the first binder and the second binder was 3% by weight based on the total weight of the first negative electrode active material layer and the second negative electrode active material layer.

A loading amount of the first negative electrode active material layer was 2.69 mAh/cm$^2$, a loading amount of the second negative electrode active material layer was 2.78 mAh/cm$^2$, and the sum of the loading amounts of the first negative electrode active material layer and the second negative electrode active material layer was 5.47 mAh/cm$^2$.

A thickness of the first negative electrode active material layer was 31.75 um, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same method as in Example 2 except that the negative electrode prepared above is used.

The N/P ratio of the secondary battery according to Example 8 was 1.07.

Example 9: Manufacture of negative electrode and secondary battery

<Preparation of slurry for first negative electrode active material layer>

Slurry for the first negative electrode active material layer was prepared in the same method as in Example 2.

<Preparation of slurry for second negative electrode active material layer>

Slurry for the second negative electrode active material layer was prepared in the same method as in Example 2 except that a copolymer (glass transition temperature Tg: 138°C) containing 75% by weight of acrylamide-derived units, 15% by weight of acrylic acid-derived units, and 10% by weight of acrylonitrile-derived units is used as the second binder.

<Formation of first and second negative electrode active material layers>

A negative electrode was manufactured in the same method as in Example 2 except that the slurry for the first negative electrode active material layer and the slurry for the second negative electrode active material layer prepared above are used.

A ratio of a weight ratio of the first binder of the first negative electrode active material layer (4% by weight, based on 100% by weight of the first negative electrode active material layer) and a weight ratio of the second binder of the second negative electrode active material layer (2% by weight, based on 100% by weight of the second negative electrode active material layer) was about 2:1.

The total weight of the first binder and the second binder was 3% by weight based on the total weight of the first negative electrode active material layer and the second negative electrode active material layer.

A loading amount of the first negative electrode active material layer was 2.69 mAh/cm$^2$, a loading amount of the second negative electrode active material layer was 2.78 mAh/cm$^2$, and the sum of the loading amounts of the first negative electrode active material layer and the second negative electrode active material layer was 5.47 mAh/cm$^2$.

A thickness of the first negative electrode active material layer was 31.75 um, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same method as in Example 2 except that the negative electrode prepared above is used.

The N/P ratio of the secondary battery according to Example 9 was 1.07.

Example 10: Manufacture of negative electrode and secondary battery

<Preparation of slurry for first negative electrode active material layer>

Slurry for the first negative electrode active material layer was prepared in the same method as in Example 2.

<Preparation of slurry for second negative electrode active material layer>

Slurry for the second negative electrode active material layer was prepared in the same method as in Example 2 except that a copolymer (glass transition temperature Tg: 128°C) containing 65% by weight of acrylamide-derived units, 20% by weight of acrylic acid-derived units, and 15% by weight of acrylonitrile-derived units is used as the second binder.

<Formation of first and second negative electrode active material layers>

A negative electrode was manufactured in the same method as in Example 2 except that the slurry for the first negative electrode active material layer and the slurry for the second negative electrode active material layer prepared above are used.

A ratio of a weight ratio of the first binder of the first negative electrode active material layer (4% by weight, based on 100% by weight of the first negative electrode active material layer) and a weight ratio of the second binder of the second negative electrode active material layer (2% by weight, based on 100% by weight of the second negative electrode active material layer) was about 2:1.

The total weight of the first binder and the second binder was 3% by weight based on the total weight of the first negative electrode active material layer and the second negative electrode active material layer.

A loading amount of the first negative electrode active material layer was 2.69 mAh/cm$^2$, a loading amount of the second negative electrode active material layer was 2.78 mAh/cm$^2$, and the sum of the loading amounts of the first negative electrode active material layer and the second negative electrode active material layer was 5.47 mAh/cm$^2$.

A thickness of the first negative electrode active material layer was 31.75 $\mu$m, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same method as in Example 2 except that the negative electrode prepared above is used.

The N/P ratio of the secondary battery according to Example 10 was 1.07.

Comparative Example 1: Manufacture of negative electrode and secondary battery

1. Manufacture of negative electrode

Artificial graphite (average particle diameter $D_{50}$: 18 um) as the carbon-based active material, a silicon-based active material which is the same as the second silicon-based active material according to Example 1, a binder which is the same as the second binder according to Example 1, and a single-walled carbon nanotube (SWCNT) as the conductive material were mixed at a weight ratio of 86.1: 9.6: 4.0: 0.3 and added to water as the slurry solvent for the negative electrode active material layer to prepare slurry for the negative electrode active material layer.

The negative electrode slurry was applied on a copper current collector (thickness: 6 um) as the negative electrode current collector at a loading amount of 5.47 mAh/cm 2, roll-pressed, and dried in a vacuum oven at 130°C for 10 hours to form a negative electrode active material layer (thickness: 63.5 um), thereby manufacturing the negative electrode (thickness of the negative electrode: 69.5 um, electrode density: 1.7 g/cc).

2. Manufacture of secondary battery

A secondary battery was manufactured in the same manner as in Example 1 except that the negative electrode prepared above is used instead of the negative electrode according to Example 1.

The N/P ratio of the secondary battery according to Comparative Example 1 was 1.07.

Comparative Example 2: Manufacture of negative electrode and secondary battery

1. Manufacture of negative electrode

Artificial graphite (average particle diameter $D_{50}$: 18 $\mu$m) as the carbon-based active material, a silicon-based active material which is the same as the second silicon-based active material according to Example 1, a binder in which the same as the first and second binders according to Example 1 are mixed at a ratio of 2:2, carboxymethylcellulose as a thickener, and a single-walled carbon nanotube (SWCNT) as the conductive material were mixed at a weight ratio of 86.1: 9.6: 4.0: 0.3 and added to water as the slurry solvent for the negative electrode active material layer to prepare slurry for the negative electrode active material layer.

The negative electrode slurry was applied on a copper current collector (thickness: 6 um) as the negative electrode current collector at a loading amount of 5.47 mAh/cm 2, roll-pressed, and dried in a vacuum oven at 130°C for 10 hours to form a negative electrode active material layer (thickness: 63.5 um), thereby manufacturing the negative electrode (thickness of the negative electrode: 69.5 um, electrode density: 1.7 g/cc).

2. Manufacture of secondary battery

A secondary battery was manufactured in the same manner as in Example 1 except that the negative electrode prepared above is used instead of the negative electrode according to Example 1.

The N/P ratio of the secondary battery according to Comparative Example 2 was 1.07.

Comparative Example 3: Manufacture of negative electrode and secondary battery

1. Manufacture of negative electrode

<Preparation of slurry for first negative electrode active material layer>

Artificial graphite (average particle diameter $D_{50}$: 18 $\mu$m) as the first carbon-based active material, a silicon-based active material that is the same as the first silicon-based active material according to Example 1, a copolymer containing 70% by weight of acrylamide-derived units, 20% by weight of acrylic acid-derived units, and 10% by weight of acrylonitrile-derived units as the first binder, and a single-wall carbon nanotube (SWCNT) as the second conductive material were mixed at a weight ratio of 85.7: 9.5: 4.5: 0.3, and added to water as a slurry solvent for the second negative electrode active material layer to prepare slurry for the first negative electrode active material layer.

<Preparation of slurry for second negative electrode active material layer>

Artificial graphite (average particle diameter $D_{50}$: 18 um) as a second carbon-based active material, a silicon-based active material that is the same as the second silicon-based active material according to Example 1, styrene butadiene rubber (average particle diameter $D_{50}$: 215 nm) as a second binder, carboxymethylcellulose (CMC) as a thickener, and a single-wall carbon nanotube (SWCNT) as the second conductive material were mixed in a weight ratio of 87.5: 9.7: 1.5: 1.0: 0.3, and added to water as a slurry solvent for the second negative electrode active material layer to prepare slurry for the second negative electrode active material layer.

<Formation of first and second negative electrode active material layers>

While applying the slurry for the first negative electrode active material layer prepared above to copper foil (thickness: 6 um) as the negative electrode current collector, the slurry for the second negative electrode active material layer prepared above was substantially simultaneously applied on the applied slurry for the first negative electrode active material layer, roll-pressed, and dried in a vacuum oven at 130°C for 10 hours to prepare the negative electrode in which the negative electrode current collector, the first negative electrode active material layer, and the second negative electrode active material layer are sequentially stacked.

A ratio of a weight ratio of the first binder of the first negative electrode active material layer (4.5% by weight, based on 100% by weight of the first negative electrode active material layer) and a weight ratio of the second binder of the second negative electrode active material layer (1.5% by weight, based on 100% by weight of the second negative electrode active material layer) was about 3:1.

The total weight of the first binder and the second binder was 3.0% by weight based on the total weight of the first negative electrode active material layer and the second negative electrode active material layer.

A loading amount of the first negative electrode active material layer was 2.71 mAh/cm$^2$, a loading amount of the second negative electrode active material layer was 2.76 mAh/cm$^2$, and the sum of the loading amounts of the first negative electrode active material layer and the second negative electrode active material layer was 5.47 mAh/cm$^2$.

A thickness of the first negative electrode active material layer was 31.75 um, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same manner as in Example 1 except that the negative electrode prepared above is used.

The N/P ratio of the secondary battery according to Comparative Example 3 was 1.07.

Comparative Example 4: Manufacture of negative electrode and secondary battery

1. Manufacture of negative electrode

<Preparation of slurry for first negative electrode active material layer>

Slurry for the first negative electrode active material layer was prepared in the same method as in Example 2.

<Preparation of slurry for second negative electrode active material layer>

Slurry for the second negative electrode active material layer was prepared in the same method as in Example 2 except that a mixture of polyvinyl alcohol (PVA) and polyacrylic acid (PAA) at a weight ratio of 7:3 was used as the second binder.

<Formation of first and second negative electrode active material layers>

A negative electrode was manufactured in the same method as in Example 2 except that the slurry for the first negative electrode active material layer and the slurry for the second negative electrode active material layer prepared above are used.

A ratio of a weight ratio of the first binder of the first negative electrode active material layer (4% by weight, based on 100% by weight of the first negative electrode active material layer) and a weight ratio of the second binder of the second negative electrode active material layer (2% by weight, based on 100% by weight of the second negative electrode active material layer) was about 2:1.

The total weight of the first binder and the second binder was 3% by weight based on the total weight of the first negative electrode active material layer and the second negative electrode active material layer.

A loading amount of the first negative electrode active material layer was 2.69 mAh/cm$^2$, a loading amount of the second negative electrode active material layer was 2.78 mAh/cm$^2$, and the sum of the loading amounts of the first negative electrode active material layer and the second negative electrode active material layer was 5.47 mAh/cm$^2$.

A thickness of the first negative electrode active material layer was 31.75 $\mu$m, a thickness of the second negative electrode active material layer was 31.75 um, and the sum of the thicknesses of the first negative electrode active material layer and the second negative electrode active material layer was 63.5 $\mu$m.

Electrode densities of the first negative electrode active material layer and the second negative electrode active material layer were 1.7 g/cc.

2. Manufacture of secondary battery

A secondary battery was manufactured in the same method as in Example 2 except that the negative electrode prepared above is used.

The N/P ratio of the secondary battery of Comparative Example 4 was 1.07.

Comparative Example 5: Manufacture of negative electrode and secondary battery

1. Manufacture of negative electrode

<Preparation of slurry for first negative electrode active material layer>

Slurry for the first negative electrode active material layer was prepared in the same method as in Example 2.

<Preparation of slurry for second negative electrode active material layer>

Slurry for the second negative electrode active material layer was prepared in the same method as in Example 2 except that a copolymer (polyacrylamide) containing 100% by weight of acrylamide-derived units is used as the second binder.

<Formation of first and second negative electrode active material layers>

A negative electrode was manufactured in the same method as in Example 2 except that the slurry for the first negative electrode active material layer and the slurry for the second negative electrode active material layer prepared above are used.
A ratio of a weight ratio of the first binder of the first negative electrode active material layer (4% by weight, based on 100% by weight of the first negative electrode active material layer) and a weight ratio of the second binder of the second negative electrode active material layer (2% by weight, based on 100% by weight of the second negative electrode active material layer) was about 2:1.
The total weight of the first binder and the second binder was 3% by weight based on the total weight of the first negative electrode active material layer and the second negative electrode active material layer.
A loading amount of the first negative electrode active material layer was 2.69 mAh/cm$^2$, a loading amount of the second negative electrode active material layer was 2.78 mAh/cm$^2$, and the sum of the loading amounts of the first negative electrode active material layer and the second negative electrode active material layer was 5.47 mAh/cm$^2$.
A thickness of the first negative electrode active material layer was 31.75 um, a thickness of the second negative electrode active material layer was 31.75 um, and the sum of the thicknesses of the first negative electrode active material layer and the second negative electrode active material layer was 63.5 um.
Electrode densities of the first negative electrode active material layer and the second negative electrode active material layer were 1.7 g/cc.

2. Manufacture of secondary battery

A secondary battery was manufactured in the same method as in Example 2 except that the negative electrode prepared above is used.
The N/P ratio of the secondary battery of Comparative Example 5 was 1.07.

Comparative Example 6: Manufacture of negative electrode and secondary battery

1. Manufacture of negative electrode

<Preparation of slurry for first negative electrode active material layer>

Slurry for the first negative electrode active material layer was prepared in the same method as in Example 2.

<Preparation of slurry for second negative electrode active material layer>

Slurry for the second negative electrode active material layer was prepared in the same method as in Example 2 except that a copolymer containing 70% by weight of acrylamide-derived units and 30% by weight of acrylic acid-derived units is used as the second binder.

<Formation of first and second negative electrode active material layers>

A negative electrode was manufactured in the same method as in Example 2 except that the slurry for the first negative electrode active material layer and the slurry for the second negative electrode active material layer prepared above are used.

A ratio of a weight ratio of the first binder of the first negative electrode active material layer (4% by weight, based on 100% by weight of the first negative electrode active material layer) and a weight ratio of the second binder of the second negative electrode active material layer (2% by weight, based on 100% by weight of the second negative electrode active material layer) was about 2:1.

The total weight of the first binder and the second binder was 3% by weight based on the total weight of the first negative electrode active material layer and the second negative electrode active material layer.

A loading amount of the first negative electrode active material layer was 2.69 mAh/cm$^2$, a loading amount of the second negative electrode active material layer was 2.78 mAh/cm$^2$, and the sum of the loading amounts of the first negative electrode active material layer and the second negative electrode active material layer was 5.47 mAh/cm$^2$.

A thickness of the first negative electrode active material layer was 31.75 um, a thickness of the second negative electrode active material layer was 31.75 um, and the sum of the thicknesses of the first negative electrode active material layer and the second negative electrode active material layer was 63.5 um.

Electrode densities of the first negative electrode active material layer and the second negative electrode active material layer were 1.7 g/cc.

2. Manufacture of secondary battery

A secondary battery was manufactured in the same method as in Example 2 except that the negative electrode prepared above is used.

The N/P ratio of the secondary battery of Comparative Example 6 was 1.07.

**Experimental example**

**Experimental Example 1: Adhesion evaluation**

A negative electrode sample was prepared by punching the negative electrode according to Example 1 into a size of 2 cm $\times$ 7 cm. Then, the negative electrode sample was immersed in the electrolyte for 3 hours and washed with dimethyl carbonate. A mixture in which 3% by weight of vinylene carbonate is added to an organic solvent in which fluoroethylene carbonate (FEC), ethylene carbonate (EC), and ethyl propionate (EP) are mixed in a volume ratio of 20:20:60, and LiPF6 as the lithium salt is added at a concentration of 1 mol/L was used as the electrolyte.

After attaching a double-sided tape to slide glass, the active material layer of the negative electrode sample was disposed to be in contact with a surface to which the tape is attached and then rubbed 10 times using a roller. Thereafter, peel-off was performed at a speed of 10 cm/min at 90 degrees using a peel test equipment, and applied force (unit: gf/20 mm) was measured.

The negative electrodes according to Example 2 to 10 and Comparative Examples 1 to 6 were also tested in the same method as above. The results are shown in Table 1 below.

**Experimental Example 2: Evaluation of lifespan characteristic**

A cycle capacity retention rate of the secondary batteries prepared in Examples 1 to 10 and Comparative Examples 1 to 6 was evaluated using an electrochemical charger and discharger.

The cycle capacity retention rate was performed at a temperature of 25°C, charge and discharge conditions are as follows.

Charging conditions: CC/CV mode, 4.5V, 0.8C, 0.05C cut off.

Discharge condition: CC mode, 0.5C, 3.2V cut off.

The capacity retention rate was calculated as follows.

Capacity retention rate (%) = {(discharging capacity in the Nth cycle)/(discharging capacity in the first cycle)} $\times$ 100

(In the above formula, N is an integer greater than or equal to 1.)

A 200-th cycle capacity retention rate (%) is shown in Table 1 below.

[Table 1]

| | Adhesion (gf/20mm) | 200-th Cycle capacity retention rate (%) |
|---|---|---|
| Example 1 | 36 | 87.2 |
| Example 2 | 53 | 88.8 |
| Example 3 | 40 | 86.4 |
| Example 4 | 30 | 91.2 |
| Example 5 | 33 | 92.7 |
| Example 6 | 53 | 93.3 |
| Example 7 | 26 | 90.4 |
| Example 8 | 31 | 90.7 |
| Example 9 | 38 | 91.1 |
| Example 10 | 28 | 90.3 |
| Comparative Example 1 | 7 | 78.1 |
| Comparative Example 2 | 13 | 80.2 |
| Comparative Example 3 | 9 | 77.7 |
| Comparative Example 4 | 18 | 78.2 |
| Comparative Example 5 | 6 | 66.5 |
| Comparative Example 6 | 20 | 76.8 |

Referring to Table 1, in the negative electrode and the secondary battery according to Examples 1 to 10, the first binder and the second binder according to the present invention may be disposed on the first negative electrode active material layer and the second negative electrode active material layer, respectively, it may be seen that the electrode adhesion and the lifespan performance are significantly improved compared to Comparative Examples.

[Description of the Symbols]

10: Negative electrode
100: Negative electrode current collector
210: First negative electrode active material layer
220: Second negative electrode active material layer

**Claims**

1. A negative electrode comprising:

    a negative electrode current collector;
    a first negative electrode active material layer disposed on the negative electrode current collector and comprising a first carbon-based active material, a first silicon-based active material, and a first binder; and
    a second negative electrode active material layer disposed on the first negative electrode active material layer and comprising a second carbon-based active material, a second silicon-based active material, and a second binder,
    wherein the first binder comprises styrene-butadiene rubber, and
    the second binder comprises a copolymer comprising an acrylamide-derived unit, an acrylic acid-derived unit, and an acrylonitrile-derived unit.

2. The negative electrode of claim 1, wherein a ratio of a weight percentage of the first binder to a weight of the first negative electrode active material layer and a weight percentage of the second binder to a weight of the second negative electrode active material layer is 0.5:1 to 9:1.

3. The negative electrode of claim 1, wherein the first binder is contained in the first negative electrode active material layer in an amount of 0.5% to 15% by weight.

4. The negative electrode of claim 1, wherein the second binder is contained in the second negative electrode active material layer in an amount of 0.5% to 15% by weight.

5. The negative electrode of claim 1, wherein the total weight of the first binder and the second binder is 0.5% to 15% by weight based on the total weight of the first negative electrode active material layer and the second negative electrode active material layer.

6. The negative electrode of claim 1, wherein the second binder comprises a copolymer containing 55% to 80% by weight of an acrylamide-derived unit, 10% to 30% by weight of an acrylic acid-derived unit, and 5% to 20% by weight of an acrylonitrile-derived unit.

7. The negative electrode of claim 1, wherein a thickness ratio of the first negative electrode active material layer and the second negative electrode active material layer is 1:0.5 to 1:2.

8. The negative electrode of claim 1, wherein the first carbon-based active material and the first silicon-based active material are contained in the first negative electrode active material layer in an amount of 90% to 99% by weight, and a weight ratio of the first carbon-based active material and the first silicon-based active material is 85:15 to 99:1.

9. The negative electrode of claim 1, wherein the second carbon-based active material and the second silicon-based active material are contained in the second negative electrode active material layer in an amount of 90% to 99% by weight, and
a weight ratio of the second carbon-based active material and the second silicon-based active material is 85:15 to 99:1.

10. The negative electrode of claim 1, wherein the first silicon-based active material comprises a first silicon-based compound represented by a chemical formula of $SiO_x$ $(0 \leq x < 2)$ and a first metal doped in the first silicon-based compound, and
the first metal comprises at least one kind of metal selected from the group consisting of Li, Mg, Ca, and Al.

11. The negative electrode of claim 1, wherein the second silicon-based active material comprises a second silicon-based compound represented by a chemical formula of $SiO_y$ $(0 \leq y < 2)$ and a second metal doped in the second silicon-based compound, and
the second metal comprises at least one kind of metal selected from the group consisting of Li, Mg, Ca, and Al.

12. The negative electrode of claim 1, wherein the sum of a loading amount of the first negative electrode active material layer and a loading amount of the second negative electrode active material layer is 4 mAh/cm$^2$ to 8 mAh/cm$^2$.

13. The negative electrode of claim 1, wherein a ratio of a loading amount of the first negative electrode active material layer and a loading amount of the second negative electrode active material layer is 1:0.5 to 1:2.

14. A secondary battery comprising:

    the negative electrode of claim 1;
    a positive electrode facing the negative electrode;
    a separator interposed between the negative electrode and the positive electrode; and
    an electrolyte.

15. The secondary battery of claim 14, wherein the positive electrode comprises:

    a positive electrode current collector; and
    a positive electrode active material layer disposed on the positive electrode current collector,
    wherein the positive electrode active material layer comprises a positive electrode active material containing lithium-cobalt-based oxide.

[FIG. 1]

**10**

220
210
100

## INTERNATIONAL SEARCH REPORT

| International application No. |
| --- |
| **PCT/KR2022/016554** |

| A. | CLASSIFICATION OF SUBJECT MATTER |
| --- | --- |

**H01M 4/131**(2010.01)i; **H01M 4/133**(2010.01)i; **H01M 4/134**(2010.01)i; **H01M 4/36**(2006.01)i; **H01M 4/48**(2010.01)i; **H01M 4/38**(2006.01)i; **H01M 4/587**(2010.01)i; **H01M 4/62**(2006.01)i; **H01M 10/052**(2010.01)i; **H01M 4/525**(2010.01)i

According to International Patent Classification (IPC) or to both national classification and IPC

| B. | FIELDS SEARCHED |
| --- | --- |

Minimum documentation searched (classification system followed by classification symbols)

H01M 4/131(2010.01); H01M 10/052(2010.01); H01M 4/13(2010.01); H01M 4/134(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 활물질층(active material layer), 탄소(carbon), 실리콘(silicon), 바인더 (binder), 스티렌-부타디엔 고무(SBR), 아크릴아마이드(acrylamide), 아크릴산(acrylic acid), 아크릴로니트릴(acrylonitrile)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2021-0123480 A (LG ENERGY SOLUTION, LTD.) 14 October 2021 (2021-10-14) See claims 1, 5-8 and 10-11; paragraphs [0050], [0064] and [0067]; and figure 1. | 1-15 |
| Y | KR 10-2021-0034966 A (LG CHEM, LTD.) 31 March 2021 (2021-03-31) See claims 1 and 3. | 1-15 |
| Y | KR 10-2020-0038168 A (LG CHEM, LTD.) 10 April 2020 (2020-04-10) See claim 1; and paragraphs [0043]-[0051]. | 10-11 |
| A | KR 10-2020-0130664 A (FUJIAN BLUE OCEAN & BLACK STONE TECHNOLOGY CO., LTD.) 19 November 2020 (2020-11-19) See entire document. | 1-15 |
| A | KR 10-2017-0076592 A (LG CHEM, LTD.) 04 July 2017 (2017-07-04) See entire document. | 1-15 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 February 2023** | **03 February 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 394 918 A1

## INTERNATIONAL SEARCH REPORT
### Information on patent family members

International application No.

**PCT/KR2022/016554**

| Patent document cited in search report | | | Publication date (day/month/year) | Patent family member(s) | | | Publication date (day/month/year) |
|---|---|---|---|---|---|---|---|
| KR | 10-2021-0123480 | A | 14 October 2021 | CN | 113939929 | A | 14 January 2022 |
| | | | | EP | 3965184 | A1 | 09 March 2022 |
| | | | | US | 2022-0255059 | A1 | 11 August 2022 |
| | | | | WO | 2021-201399 | A1 | 07 October 2021 |
| KR | 10-2021-0034966 | A | 31 March 2021 | CN | 113994509 | A | 28 January 2022 |
| | | | | EP | 3996173 | A1 | 11 May 2022 |
| | | | | JP | 2022-528479 | A | 10 June 2022 |
| | | | | US | 2022-0216479 | A1 | 07 July 2022 |
| | | | | WO | 2021-060737 | A1 | 01 April 2021 |
| KR | 10-2020-0038168 | A | 10 April 2020 | CN | 111771300 | A | 13 October 2020 |
| | | | | US | 2020-0403231 | A1 | 24 December 2020 |
| KR | 10-2020-0130664 | A | 19 November 2020 | CN | 110218285 | A | 10 September 2019 |
| | | | | CN | 110218285 | B | 07 September 2021 |
| | | | | EP | 3736886 | A1 | 11 November 2020 |
| | | | | JP | 2020-186385 | A | 19 November 2020 |
| | | | | JP | 6972231 | B2 | 24 November 2021 |
| | | | | KR | 10-2387537 | B1 | 19 April 2022 |
| KR | 10-2017-0076592 | A | 04 July 2017 | CN | 108140840 | A | 08 June 2018 |
| | | | | CN | 108140840 | B | 02 March 2021 |
| | | | | EP | 3396750 | A1 | 31 October 2018 |
| | | | | EP | 3396750 | B1 | 09 October 2019 |
| | | | | KR | 10-1952673 | B1 | 27 February 2019 |
| | | | | PL | 3396750 | T3 | 30 April 2020 |
| | | | | US | 10862126 | B2 | 08 December 2020 |
| | | | | US | 2018-0351177 | A1 | 06 December 2018 |

Form PCT/ISA/210 (patent family annex) (July 2022)

**REFERENCES CITED IN THE DESCRIPTION**

**Patent documents cited in the description**

- KR 1020210144587

- KR 1020170074030